# EUROPEAN PATENT APPLICATION

(11) **EP 4 624 223 A1**
(43) Date of publication of application: **01.10.2025**
(21) Application number: 24166857.3
(22) Date of filing: 27.03.2024
(51) Int. Cl.: B60L 3/00, B60L 3/04, B60L 58/20

(54) **A HIGH VOLTAGE TRACTION SYSTEM**

(71) Applicant: VOLVO TRUCK CORPORATION, 405 08 Göteborg (SE)
(72) Inventor: NYSTRÖM, Mats, 423 53 TORSLANDA (SE)
(74) Representative: Kransell & Wennborg KB

(57) **Abstract**

A high voltage traction system (101) for a vehicle (1), comprising: a common traction voltage bus (135); a plurality of battery packs (131, 132, 133) connectable to the common traction voltage bus (135); at least one load (110a, 110b) connected to, and powered by, the battery packs (131, 132, 133) via the common traction voltage bus (135); a low voltage system (105) being connected to, and powered by, the battery packs (131, 132, 133) via the common traction voltage bus (135), the low voltage system (105) being connected to the common traction voltage bus (135) by an individual safety connection (106) comprising a first connection line (106a) including a first safety connector (107a) connected in series with a first DC/DC converter (108a), and a second connection line (106b) arranged separately and in parallel to the first connection line (106a), the second connection line (106b) including a second safety connector (107a) connected in series with a second DC/DC converter (108b).

## Description

### TECHNICAL FIELD

The disclosure relates generally to traction systems of a vehicle. In particular aspects, the disclosure relates to a high voltage traction system. The disclosure can be applied to heavy-duty vehicles, such as trucks, buses, and construction equipment, including marine vessels, among other vehicle types. Although the disclosure may be described with respect to a particular vehicle, the disclosure is not restricted to any particular vehicle.

### BACKGROUND

A vehicle typically comprises an engine for propelling the vehicle. The engine may be powered by various means, such as e.g. by liquid or gaseous fuel in an internal combustion engine, or by electric power in an electric traction machine. Moreover, hybrid solutions exist in which the vehicle is propelled both by an internal combustion engine and an electric traction machine. In either way, an energy storage device is used to store the energy needed in order to propel the vehicle. Energy storage devices may further be used to power other loads and systems in the vehicle.

For electric vehicles, a battery or a battery pack may constitute the energy storage device, the battery or battery pack being comprised in an energy storage system of a high voltage traction system configured to power the electric traction machine for propelling the vehicle, as well as any other loads and systems in the vehicle. Several series-connected and/or parallel connected battery cells arranged into one or more battery modules may be grouped into the battery pack. The battery pack is periodically in need of charging, and is then electrically connected to an electrical energy source, e.g. an external charger via a plug which may be directly connected to the power grid, or by an on-board charger. Such chargers may commonly be referred to as a power source.

In many applications, several battery packs are included in the energy storage system by being parallelly connected to a common traction voltage bus (or common traction power bus), sometimes referred to as multi-battery pack system. Hereby, the supplied power can be adapted based on the number of battery packs, and/or higher power requirements of the vehicle may be met. Moreover, a multi-battery pack system provide a redundancy, as several battery packs may supply power individually. Typically, each battery pack is associated with a switch, or contactor, enabling connection and disconnection of the battery pack relative to the common traction voltage bus and the load and/or power source. However, existing high voltage traction systems may face challenges related to safety, reliability, and/or efficiency. For instance, the complexity of managing multiple power packs and multiple loads and/or systems of the vehicle, and providing uninterrupted power supply to the loads and/or systems under various operating conditions of the vehicle can be problematic. Additionally, an electric fault in one component of the high voltage traction system may propagate through the system and effect other components of the high voltage traction system.

### SUMMARY

According to a first aspect of the disclosure, a high voltage traction system for a vehicle is provided. The high voltage traction system comprises: a common traction voltage bus having an operating voltage of at least 48 V; a plurality of parallelly arranged battery packs connectable to the common traction voltage bus; at least one load connected to, and powered by, the battery packs via the common traction voltage bus, the at least one load being connected to the common traction voltage bus by a corresponding individual load connector; and a low voltage system having an operating voltage lower than that of the common traction voltage bus, the low voltage system being connected to, and powered by, the battery packs via the common traction voltage bus, the low voltage system being connected to the common traction voltage bus by an individual safety connection, wherein the individual safety connection comprises a first connection line comprising a first safety connector connected in series with a first DC/DC converter, and a second connection line arranged separately and in parallel to the first connection line, the second connection line comprising a second safety connector connected in series with a second DC/DC converter, and wherein the two safety connectors comprises DC/DC protection fuses. The first aspect of the disclosure may seek to overcome problems related to insufficient protection against faults, e.g. electrical faults, in the system. In particular, the protection of faults effecting the low voltage system may be improved. That is, by the separate first and second connection lines of the individual safety connection, the reliability and safety of the low voltage system may be improved, and the availability thereof enhanced. For example, as vehicle safety systems, e.g. critical safety systems of the vehicle, are typically operated by the low voltage system, the reliability and safety of such vehicle safety system may be improved. In other words, owing to the first and second connection lines of the individual safety connection, an advantageous redundancy of the low voltage system may be provided. Thus, in more detail, the use of two separate safety connectors comprising corresponding DC/DC protection fuses, each one of the safety connectors being connected in series with an associated DC/DC converter, may provide for an improved redundancy of the power supply of the low voltage system. Thus, the low voltage system may remain operational in an electrically safe manner, even if one of the first and second connection lines of the individual safety connection fails or is subject to an electrical fault. Hereby, the system may align with automotive safety standards, such as those specified for ASIL D in ISO 26262. A technical benefit may include improved protection against electrical faults in the system. Moreover, by providing a load connector for the at least one load which is separated from the safety connection for the low voltage system, individual protection and connection possibilities for the at least one load and the low voltage system is provided, which may further improve the reliability and safety of the low voltage system. For example, all individual connections to the common traction voltage bus, i.e. any load and the low voltage system, may be individually protected by individual connectors. Also, by enabling individual protection and connection for the at least one load and the low voltage system, an efficient distribution of power from the plurality of battery packs may be provided. Thus, vehicle critical and non-critical systems may be powered while providing a sufficient efficiency and safety.

Optionally in some examples, including in at least one preferred example, the operating voltage of the common traction voltage bus is above 60 V. Operating voltages above 48 V, or above 60 V, may be referred to as high voltage, and operating voltages below 60 V, or at or below 48 V, may be referred to as low voltage. Thus, the low voltage system may have an operating voltage lower than 60 V, e.g. 48 V or lower. Thus, the common traction voltage bus may be high voltage, in contrast to the low voltage system. The operating voltage of the common traction voltage bus may e.g. be between 400 V and 1200 V, such as e.g. between 500 V and 900 V, or between 500 V and 700 V. Typically, the high voltage traction system is a direct current (DC) system.

Optionally in some examples, including in at least one preferred example, the low voltage system has an operating voltage of 12 V, 24 V or 48 V. A technical benefit may include adaptability to the vehicle systems, such as vehicle safety systems, powered by the low voltage system. Thus, the low voltage system may provide a flexibility to accommodate different low voltage applications and compatibility with a wide range of vehicle architectures and vehicle safety systems.

Optionally in some examples, including in at least one preferred example, the individual load connector comprises a protection fuse. A technical benefit may include improved protection of faults in the system. Thus, an electrical fault in the at least one load, which trigger the protection fuse of the individual load connector, may be prevented from effecting the power supply of the low voltage system.

Optionally in some examples, including in at least one preferred example, each one of the DC/DC-converters is sized and dimensioned to alone power the low voltage system. A technical benefit may include improved reliability and safety of the low voltage system. Thus, even in case of failure in one of the first and second connection lines, the other one of the first and second connection lines may provide sufficient power to the low voltage system.

Optionally in some examples, including in at least one preferred example, each one of the DC/DC protection fuses is a thermal fuse or a pyro-fuse. A technical benefit may include advantageous protection of the first and second connection lines. For example, the thermal fuses may be configured to be triggered in response to a temperature above a predetermined threshold temperature. Typically, as the internal temperature of the corresponding thermal fuse exceeds the predetermined threshold temperature, a fuse filament of the thermal fuse melts. However, as the thermal fuse may under certain circumstances be overheated and explode, the thermal fuses may be arranged with an associated contactor to avoid such situation. For example, the pyro-fuses may be configured to be triggered in response to an external signal, e.g. in response to a measured current being above a threshold value, or in response to an external action such as an accident.

Optionally in some examples, including in at least one preferred example, the system further comprises an associated contactor for each battery pack, the contactors being configured to independently connect the battery packs to the common traction voltage bus by closing, and to independently disconnect the battery packs from the common traction voltage bus by opening. A technical benefit may include improved reliability and safety of the system. Thus, the battery packs may be individually and selectively connected and disconnected to and from the common traction voltage bus.

Optionally in some examples, including in at least one preferred example, the system further comprises an overcurrent fuse for each one of the battery packs, the overcurrent fuses being configured to protect the battery packs with regards to a battery pack overcurrent of a predetermined value. A technical benefit may include improved reliability and safety of the system. Thus, an electrical fault in one of the battery packs, which trigger the overcurrent fuse of such battery pack, may be prevented from effecting the other battery packs and/or the power supply of the low voltage system.

Optionally in some examples, including in at least one preferred example, the associated contactor for each one of the battery packs is integrated in the battery pack, or is arranged between the associated overcurrent fuse of the battery pack and the common traction voltage bus. A technical benefit may include improved reliability and safety of the system. Thus, by an activation of the overcurrent fuse, the corresponding battery pack may be isolated from the other components of the system. Hereby, the system may align with automotive safety requirements, such as those specified for UN regulation R100 for a stand-alone battery pack.

Optionally in some examples, including in at least one preferred example, the predetermined value for each overcurrent fuse is based on the maximum current rating of the associated battery pack. A technical benefit may include improved reliability and safety of the system. The overcurrent fuses may be configured to ensure that the maximum performance of the associated battery pack is not exceeded by a predetermined value for a predetermined time. For example, the overcurrent fuses may be configured to be trigged upon an overcurrent corresponding to 200% of the current rating of the associated battery pack.

Optionally in some examples, including in at least one preferred example, the DC/DC protection fuses are rated based on the maximum allowable current for the low voltage system. A technical benefit may include improved reliability and safety of the system. For example, the DC/DC protection fuses may be configured to ensure that enough current is available for the low voltage system, at least to maintain vehicle safety systems.

Optionally in some examples, including in at least one preferred example, the low voltage system is configured to power a vehicle safety system including power steering. A technical benefit may include improved reliability and safety of the vehicle safety system and the power steering. The vehicle safety system is typically configured to power vehicle critical safety features, such as the power steering of the vehicle.

Optionally in some examples, including in at least one preferred example, the at least one load is an electric traction machine of the vehicle. A technical benefit may include improved reliability and safety of the low voltage system relative to an electrical fault in the electric traction machine, or the individual load connector connected to the electric traction machine. Thus, an electrical fault in the electric traction machine, which e.g. trigger the protection fuse of the individual load connector associated with the electric traction machine, may be prevented from effecting the power supply of the low voltage system, and e.g. the power steering.

Optionally in some examples, including in at least one preferred example, the plurality of battery packs, the DC/DC converters, and the two safety connectors comprising DC/DC protection fuses are configured such that the probability of failure of the low voltage system with regards to the high voltage traction system is below 10⁻¹⁵. A technical benefit may include improved protection against electrical faults in the system. Moreover, by such probability of failure of the low voltage system, the system may align with automotive safety requirements as previously described. The probability of failure below 10⁻¹⁵ may improve the integrity of the system and the continuous operation of the low voltage system and any vehicle safety system powered by the low voltage system. The above probability of failure of the low voltage system is for example set in relation to internal electrical faults of the high voltage traction system e.g. related to failures of powering of the low voltage system.

Optionally in some examples, including in at least one preferred example, the probability of failure for the low voltage system is determined with regards to ISO 26262. A technical benefit may include a standardized way of determining the probability of failure for the low voltage system, and/or adherence to recognized automotive safety standards. For example, a hazard analysis and risk assessment is performed for the low voltage system, or powering thereof, with regards to the ASIL Assessment Process of ISO26262.

Optionally in some examples, including in at least one preferred example, the system further comprises a charging contactor configured to connect the battery packs to an external charger by closing, and to disconnect the battery packs from the external charger by opening. A technical benefit may include controlled charging processes with improved reliability and safety of the system. Thus, the battery packs may be connected and disconnected to and from the external charger by the charging contactor. The external charger may e.g. be electrically connected to the power grid. Thus, the system may allow for the safe integration of the external charger, protecting the battery packs from potential overcharging.

Optionally in some examples, including in at least one preferred example, the charging contactor is connectable to the common traction voltage bus. A technical benefit may include streamlined power transmission between the external charger and the common traction voltage bus. Hereby, the battery packs may be powered by the common traction voltage bus.

Optionally in some examples, including in at least one preferred example, the system further comprises a computer system comprising a processing circuitry configured to disconnect the external charger by opening the charging contactor in response to receiving an end of charging instruction, and to prevent connection of the external charger by opening, or preventing closing, of the charging contactor in the absence of receiving a start of charging instruction. A technical benefit may include advantageous control over the charging process of the battery packs, e.g. ensuring that charging only occurs under predefined, and appropriate, conditions and is terminated in a predefined, and correctly manner, further improving the reliability and safety of the system.

Optionally in some examples, including in at least one preferred example, the processing circuitry is further configured to prevent connection of the external charger by opening, or preventing closing, of the charging contactor in the absence of receiving an activation status of the vehicle parking brake. A technical benefit may include improved reliability and safety of the system e.g. by ensuring that charging only occurs under predefined, and appropriate, conditions.

Optionally in some examples, including in at least one preferred example, the processing circuitry is further configured to connect the external charger by closing the charging contactor in response to receiving a start of charging instruction and an activation status of the vehicle parking brake. A technical benefit may include improved reliability and safety of the system e.g. by ensuring that charging only occurs under predefined, and appropriate conditions.

According to a second aspect of the disclosure, a vehicle comprising the high voltage traction system of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of an electric vehicle comprising a high voltage traction system having a plurality of parallelly arranged battery packs according to one example.
**FIG. 2** is a schematic view the high voltage traction system of Fig. 1 according to one example.

### DETAILED DESCRIPTION

The detailed description set forth below provides information and examples of the disclosed technology with sufficient detail to enable those skilled in the art to practice the disclosure.

The disclosed technology may solve the problem related to insufficient protection against electrical faults in the system. In particular, the protection of faults effecting the low voltage system may be improved. By the disclosed technology, and in particular owing to the separate first and second connection lines of the individual safety connection for the low voltage system, the reliability and safety of the low voltage system may be improved, and the availability thereof enhanced. Thus, the low voltage system may remain operational in an electrically safe manner, even if one of the first and second connection lines of the individual safety connection fails or is subject to an electrical fault. A technical benefit may include improved protection against electrical faults in the system.

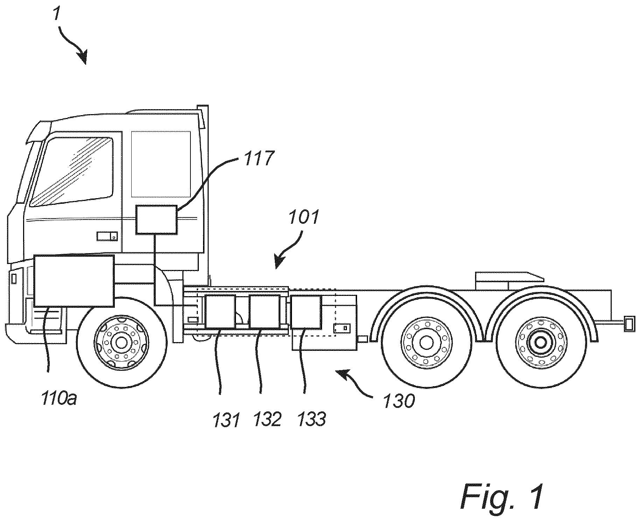

**FIG. 1** shows a vehicle 1 in the form of an exemplary heavy duty truck. The vehicle 1 is an electric vehicle, such as a full electric vehicle or a hybrid, comprising at least one electric machine, being an electric traction machine 110a, powered by a high voltage traction system 101 comprising an energy storage system 130 including a plurality of battery packs 131, 132, 133 (here exemplified as three battery packs 131, 132, 133). The battery packs 131, 132, 133 are configured to power loads and systems of the vehicle 1, such as e.g. the electric traction machine 110a. Moreover, the vehicle 1 comprises a computer system 117 configured for controlling at least parts of the operation of the high voltage traction system 101. The vehicle 1 typically further comprises other parts of the powertrain such as transmission, drive shafts and wheels (not shown in detail). The electric traction machine 110a may be operated as an electric motor consuming electricity provided by the battery packs 131, 132, 133 to provide propulsion power to the vehicle 1, and may be operated as a generator to generate electricity to charge the battery packs 131, 132, 133.

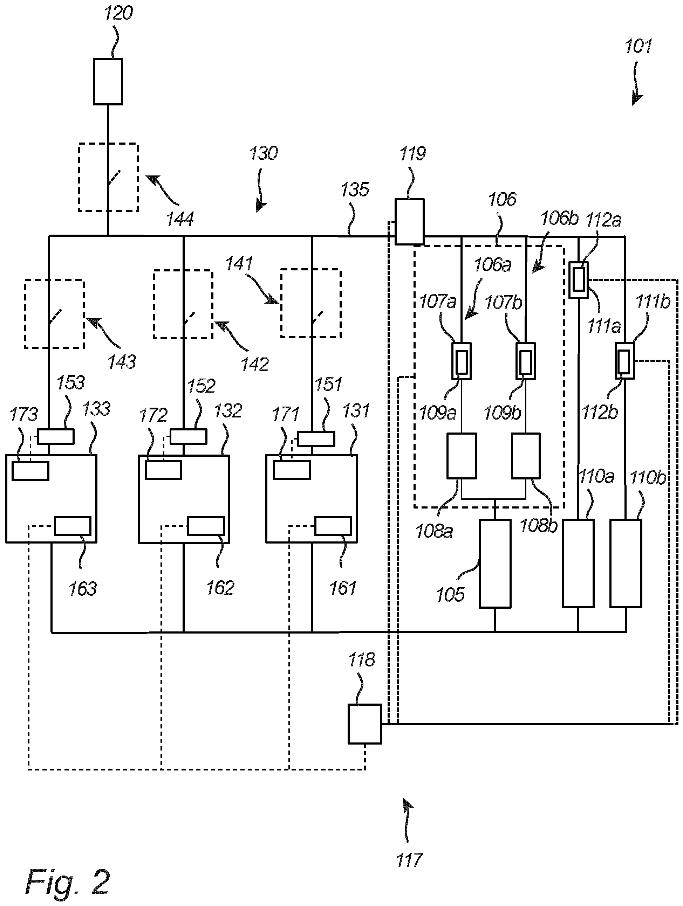

**FIG. 2** is a schematic view of the high voltage traction system 101 of Fig . 1 and the corresponding energy storage system 130 including the plurality of battery packs 131, 132, 133, as well as the computer system 117 comprising processing circuitry 118. The plurality of battery packs 131, 132, 133 is arranged in parallel for connection to a common traction voltage bus 135 for powering a plurality of loads and systems 105, 110a, 110b, here being a low voltage system 105, the electric traction machine 110a and an auxiliary load 110b. The auxiliary load 110b may e.g. be a high voltage load of the vehicle such as e.g. a crane or other high voltage auxiliary equipment. The common traction voltage bus 135 has an operating voltage of at least 48 V, e.g. over 60 V, and may in some examples be comprised in a junction box. The low voltage system 105 has an operating voltage lower than that of the common traction voltage bus 135, and lower than 60 V, typically 12 V, 24 V or 48 V. In case the low voltage system 105 has an operating voltage of 48 V, the common traction voltage bus 135 has an operating voltage of above 48 V. The operating voltage of the common traction voltage bus 135 is determined by the plurality of battery packs 131, 132, 133.

Each one of the battery packs 131, 132, 133 typically comprises a plurality of series-connected battery cells. The battery cells of a battery pack 131, 132, 133may be clustered into battery modules wherein each battery pack 131, 132, 133 comprises a plurality of series-connected battery modules. The battery cells in a battery module may be series-connected and/or be parallelly connected. The energy storage system 130 may be referred to as a multi-battery pack system.

In more detail, the high voltage traction system 101 comprises a first battery pack 131, a second battery pack 132 and a third battery pack 133, but it should be noted that any number of battery packs equal to, or higher than, two may be included in the high voltage traction system 101. The high voltage traction system 101 of Fig. 2 furthermore comprises an associated contactor 141, 142, 143 for each battery pack 131, 132, 133. Thus, a first contactor 141 is configured to connect and disconnect the first battery pack 131 to and from to the common traction voltage bus 135 by closing and opening, respectively, and a second contactor 142 is configured to connect and disconnect the second battery pack 132 to and from the common traction voltage bus 135 by closing and opening, respectively, and a third contactor 143 is configured to connect and disconnect the third battery pack 133 to and from the common traction voltage bus 135 by closing and opening, respectively. Thus, the contactors 141, 142, 143 are configured to independently connect the battery packs 131, 132, 133 to the common traction voltage bus 135 by closing, and to independently disconnect the battery packs 131, 132, 133 from the common traction voltage bus 135 by opening. The computer system 117, or processing circuitry 118, is typically configured to control at least part of the operation of the contactors 141, 142, 143, and thus the opening and closing of the first, second and third contactors 141, 142, 143. In other words, the contactors 141, 142, 143 are, via the computer system 117, configured to disconnect the first, second and third battery packs 131, 132, 133 from the common traction voltage bus 135. It should be noted that the high voltage traction system 101 may comprise additional contactors (e.g. pre-charge contactors, secondary contactors) for one or more of the battery packs 131, 132, 133.

The plurality of loads and systems 105, 110a, 110b may be powered by all, some, or any one, of the first, second and third battery packs 131, 132, 133 by closing the corresponding first, second and third contactors 141, 142, 143, i.e. by connecting the first, second and/or third battery packs 131, 132, 133 to the common traction voltage bus 135.

Each one of the battery packs 131, 132, 133 may be associated with a corresponding overcurrent fuse 161, 162, 163. The overcurrent fuses 161, 162, 163 are typically configured to protect the battery packs 131, 132, 133 with regards to a battery pack overcurrent of a predetermined value. The predetermined value for each overcurrent fuse 161, 162, 163 may e.g. be based on the maximum current rating of the associated battery pack 131, 132, 133. The overcurrent fuses 161, 162, 163 may be thermal fuses or a pyro-fuses. For example, the overcurrent fuses 161, 162, 163 may be controllable fuses configured to be activated by the computer system 117 (e.g. in response to a measured overcurrent). As shown in Fig. 2, the associated contactor 141, 142, 143 for each one of the battery packs 131, 132, 133 is arranged between the corresponding battery pack 131, 132, 133 including the overcurrent fuses 161, 162, 163, and the common traction voltage bus 135. However, the contactors 141, 142, 143 may as well be integrated in the battery packs 131, 132, 133.

The high voltage traction system 101 further comprises a corresponding individual load connector 111a, 111b for electrically connecting the common traction voltage bus 135 with the electric traction machine 110a and the auxiliary load 110b. Each one of the individual load connectors 111, 111b comprises a protection fuse 112a, 112b. Thus, a first load connector 111a electrically connects the common traction voltage bus 135 and the electric traction machine 110a via a first protection fuse 112a. Correspondingly, a second load connector 111b electrically connects the common traction voltage bus 135 and the auxiliary load 110b via a second protection fuse 112b. The protection fuses 112a, 112b are typically configured to be activated in response to a fault, e.g. an electrical fault, in the electric traction machine 110a and auxiliary load 110b, respectively. The protection fuses 112a, 112b may be thermal fuses or a pyro-fuses. For example, the protection fuses 112a, 112b may be controllable fuses configured to be activated by the computer system 117 (e.g. in response to a measured overcurrent).

The high voltage traction system 101 further comprises an individual safety connection 106 for electrically connecting the common traction voltage bus 135 with the low voltage system 105. The individual safety connection 106 comprises a first connection line 106a and a second connection line 106b arranged separately and in parallel to the first connection line 106a. The first connection line 106a comprises a first safety connector 107a connected in series with a first DC/DC converter 108a, and the second connection line 106b comprises a second safety connector 107a connected in series with a second DC/DC converter 108b. The two safety connectors 107a, 107b of the first and second connection lines 106a, 106b comprise a corresponding DC/DC protection fuse 109a, 109b, e.g. a thermal fuse or a pyro-fuse. Typically, each one of the DC/DC-converters 108a, 108b is sized and dimensioned to alone power the low voltage system 105. Moreover, the DC/DC protection fuses 109a, 109b may be rated based on the maximum allowable current for the low voltage system 105. The DC/DC protection fuses 109a, 109b may be thermal fuses or a pyro-fuses. For example, the DC/DC protection fuses 109a, 109b may be controllable fuses configured to be activated by the computer system 117 (e.g. in response to a measured overcurrent).

By providing the separate first and second connection lines 106a, 106b of the individual safety connection 106 to the low voltage system 105, the reliability and safety of the low voltage system 105 may be improved, and thus the availability of the low voltage system 105 enhanced. Hereby, the protection of faults effecting the low voltage system 105 may be improved. Moreover, by providing a corresponding load connector 111a, 111b for the electric traction machine 110a and the auxiliary load 1 10b, separated from the safety connection 106 for the low voltage system 105, individual protection and connection possibilities for the electric traction machine 110a and the auxiliary load 110b as well as the low voltage system 105 is provided, which may further improve the reliability and safety of the low voltage system 105, as the risk of having electric faults propagating through the system is reduced. For example, in response to an electrical fault in the electric traction machine 110a, the first protection fuse 112a may be triggered preventing the electric fault to propagate through the system.

The low voltage system 150 may e.g. be configured to power vehicle safety systems, or critical safety systems, of the vehicle including vehicle critical safety features, such as the power steering of the vehicle. Thus, the reliability and safety of such vehicle safety system may be improved. In other words, owing to at least the previously described first and second connection lines 106a, 106b of the individual safety connection 106, an advantageous redundancy of the low voltage system 105 may be provided. Thus, the low voltage system 105 may remain operational in an electrically safe manner, even if one of the first and second connection lines 106a, 106b of the individual safety connection fails 106 or is subject to an electrical fault (provided that the other one of the first and second connection lines 106a, 106b remains functional).

For example, the high voltage traction system 101, or more specifically, the plurality of battery packs 131, 132, 133, the DC/DC converters 108a, 108b, and the two safety connectors 107a, 107b comprising DC/DC protection fuses 109a, 109b may be configured such that the probability of failure of the low voltage system 105 with regards to the high voltage traction system 101 is below 10⁻¹⁵. For example, the probability of failure for the low voltage system 105 may be determined with regards to ISO 26262. The high voltage traction system may e.g. align with automotive safety requirements, such as those specified for ASIL D in ISO 26262.

As also shown in Fig. 2, the high voltage traction system 101 comprises a charging contactor 144 configured to connect the battery packs 131, 132, 133 to an external charger 120 by closing, and to disconnect the battery packs 131, 132, 133 from the external charger 120 by opening. As seen in Fig. 2, the charging contactor 144 is electrically connected to the common traction voltage bus 135. The processing circuitry 118 of the computer system 117 may be configured to disconnect the external charger 120 by opening the charging contactor 144 in response to receiving an end of charging instruction, and to prevent connection of the external charger 120 by opening, or preventing closing, of the charging contactor 144 in the absence of receiving a start of charging instruction. Moreover, the processing circuitry 188 may be further configured to prevent connection of the external charger 120 by opening, or preventing closing, of the charging contactor 144 in the absence of receiving an activation status of the vehicle parking brake, and/or be further configured to connect the external charger 120 by closing the charging contactor 144 in response to receiving a start of charging instruction and an activation status of the vehicle parking brake. Thus, charging of the energy storage system 130 may be controlled to only occur under predefined, and appropriate, conditions and is terminated in a predefined, and correctly, manner further improving the reliability and safety of the system.

As also shown in Fig. 2, the high voltage traction system 101 may comprise a plurality of sensors configured to measure the current, voltage and/or temperature in each one of the battery packs 131, 132, 133. In more detail, a first sensor 151 is configured to measure current, voltage and/or temperature in the first battery pack 131 and to send sensor data of the measurement to the processing circuitry 118 of the computer system 117, a second sensor 152 is configured to measure a current, voltage and/or temperature in the second battery pack 132 and to send sensor data of the measurement to the processing circuitry 118 of the computer system 117, and a third sensor 153 is configured to measure a current, voltage and/or temperature in the third battery pack 133 and to send sensor data of the measurement to the processing circuitry 118 of the computer system 117. As shown in Fig. 2, each one of the first, second and third voltage sensor 151, 152, 153 is arranged to measure the current, voltage and/or temperature of a corresponding position 171, 172, 173 of the battery packs 131, 132, 133, the positions 171, 172, 173 being e.g. the corresponding battery pack terminal, a battery cell, or a group of battery cells, in the associated battery pack 131, 132, 133. The high voltage traction system 101 may further comprise other sensors, such as a fourth sensor 119 configured to measure the current, voltage and/or temperature of the common traction voltage bus 135, and/or a fifth current sensor (not shown) configured to measure the current, voltage and/or temperature of the low voltage system 105, or of the first and/or second connection lines 106a, 106b, and/or a sixth current sensor (not shown) configured to measure the current, voltage and/or temperature of the electric traction machine 110a and/or the auxiliary load 110b.

Example 1. A high voltage traction system for a vehicle, the high voltage traction system comprising: a common traction voltage bus having an operating voltage of at least 48 V; a plurality of parallelly arranged battery packs connectable to the common traction voltage bus; at least one load connected to, and powered by, the battery packs via the common traction voltage bus, the at least one load being connected to the common traction voltage bus by a corresponding individual load connector; and a low voltage system having an operating voltage lower than that of the common traction voltage bus, the low voltage system being connected to, and powered by, the battery packs via the common traction voltage bus, the low voltage system being connected to the common traction voltage bus by an individual safety connection; wherein the individual safety connection comprises a first connection line comprising a first safety connector connected in series with a first DC/DC converter, and a second connection line arranged separately and in parallel to the first connection line, the second connection line comprising a second safety connector connected in series with a second DC/DC converter, and wherein the two safety connectors comprises DC/DC protection fuses.

Example 2. The system of example 1, wherein the individual load connector comprises a protection fuse.

Example 3. The system of any of examples 1-2, wherein each one of the DC/DC-converters is sized and dimensioned to alone power the low voltage system.

Example 4. The system of any of examples 1-3, wherein each one of the DC/DC protection fuses is a thermal fuse or a pyro-fuse.

Example 5. The system of any of examples 1-4, further comprising an associated contactor for each battery pack, the contactors being configured to independently connect the battery packs to the common traction voltage bus by closing, and to independently disconnect the battery packs from the common traction voltage bus by opening.

Example 6. The system of any of examples 1-5, further comprising an overcurrent fuse for each one of the battery packs, the overcurrent fuses being configured to protect the battery packs with regards to a battery pack overcurrent of a predetermined value.

Example 7. The system of examples 5-6, wherein the associated contactor for each one of the battery packs is integrated in the battery pack, or is arranged between the associated overcurrent fuse of the battery pack and the common traction voltage bus.

Example 8. The system of any of examples 6-7, wherein the predetermined value for each overcurrent fuse is based on the maximum current rating of the associated battery pack.

Example 9. The system of any of examples 1-8, wherein the DC/DC protection fuses are rated based on the maximum allowable current for the low voltage system.

Example 10. The system of any of examples 1-9, wherein the low voltage system is configured to power a vehicle safety system including power steering.

Example 11. The system of any of examples 1-10, wherein the at least one load is an electric traction machine of the vehicle.

Example 12. The system of any of examples 1-10, wherein the low voltage system has an operating voltage of 12 V, 24 V or 48 V.

Example 13. The system of any of examples 1-12, wherein the plurality of battery packs, the DC/DC converters, and the two safety connectors comprising DC/DC protection fuses are configured such that the probability of failure of the low voltage system with regards to the high voltage traction system is below 10-15.

Example 14. The system of example 13, wherein the probability of failure for the low voltage system is determined with regards to ISO 26262.

Example 15. The system of any of examples 1-14, further comprising a charging contactor configured to connect the battery packs to an external charger by closing, and to disconnect the battery packs from the external charger by opening.

Example 16. The system of example 15, wherein the charging contactor is connectable to the common traction voltage bus.

Example 17. The system of any of examples 15-16, further comprising a computer system comprising a processing circuitry configured to disconnect the external charger by opening the charging contactor in response to receiving an end of charging instruction, and to prevent connection of the external charger by opening, or preventing closing, of the charging contactor in the absence of receiving a start of charging instruction.

Example 18. The system of example 17, wherein the processing circuitry is further configured to prevent connection of the external charger by opening, or preventing closing, of the charging contactor in the absence of receiving an activation status of the vehicle parking brake.

Example 19. The system of any one of examples 17-18, wherein the processing circuitry is further configured to connect the external charger by closing the charging contactor in response to receiving a start of charging instruction and an activation status of the vehicle parking brake.

Example 20. A vehicle comprising the high voltage traction system of any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A high voltage traction system (101) for a vehicle (1), the high voltage traction system (101) comprising:
- a common traction voltage bus (135) having an operating voltage of at least 48 V,
- a plurality of parallelly arranged battery packs (131, 132, 133) connectable to the common traction voltage bus (135),
- at least one load (110a, 110b) connected to, and powered by, the battery packs (131, 132, 133) via the common traction voltage bus (135), the at least one load (110a, 110b) being connected to the common traction voltage bus (135) by a corresponding individual load connector (111a, 111b), and
- a low voltage system (105) having an operating voltage lower than that of the common traction voltage bus (135), the low voltage system (105) being connected to, and powered by, the battery packs (131, 132, 133) via the common traction voltage bus (135), the low voltage system (105) being connected to the common traction voltage bus (135) by an individual safety connection (106),
wherein the individual safety connection (106) comprises a first connection line (106a) comprising a first safety connector (107a) connected in series with a first DC/DC converter (108a), and a second connection line (106b) arranged separately and in parallel to the first connection line (106a), the second connection line (106b) comprising a second safety connector (107a) connected in series with a second DC/DC converter (108b), and wherein the two safety connectors (107a, 107b) comprises DC/DC protection fuses (109a, 109b).

2. The system (101) of claim 1, wherein the individual load connector (111a, 111b) comprises a protection fuse (112a, 112b).

3. The system (101) of any of claims 1-2, wherein each one of the DC/DC-converters (108a, 108b) is sized and dimensioned to alone power the low voltage system (105).

4. The system (101) of any of claims 1-3, wherein each one of the DC/DC protection fuses (109a, 109b) is a thermal fuse or a pyro-fuse.

5. The system (101) of any of claims 1-4, further comprising an associated contactor (141, 142, 143) for each battery pack (131, 132, 133), the contactors (141, 142, 143) being configured to independently connect the battery packs (131, 132, 133) to the common traction voltage bus (135) by closing, and to independently disconnect the battery packs (131, 132, 133) from the common traction voltage bus (135) by opening.

6. The system (101) of any of claims 1-5, further comprising an overcurrent fuse (161, 162, 163) for each one of the battery packs (131, 132, 133), the overcurrent fuses (161, 162, 163) being configured to protect the battery packs (131, 132, 133) with regards to a battery pack overcurrent of a predetermined value.

7. The system (101) of claims 5-6, wherein the associated contactor (141, 142, 143) for each one of the battery packs (131, 132, 133) is integrated in the battery pack (131, 132, 133), or is arranged between the associated overcurrent fuse (161, 162, 163) of the battery pack (131, 132, 133) and the common traction voltage bus (135).

8. The system (101) of any of claims 6-7, wherein the predetermined value for each overcurrent fuse (161, 162, 163) is based on the maximum current rating of the associated battery pack (131, 132, 133).

9. The system (101) of any of claims 1-8, wherein the DC/DC protection fuses (109a, 109b) are rated based on the maximum allowable current for the low voltage system (105).

10. The system (101) of any of claims 1-9, wherein the low voltage system (105) is configured to power a vehicle safety system including power steering.

11. The system (101) of any of claims 1-10, wherein the at least one load (110a, 110b) is an electric traction machine (10) of the vehicle (1).

12. The system (101) of any of claims 1-11, wherein the low voltage system has an operating voltage of 12 V, 24 V or 48 V.

13. The system (101) of any of claims 1-12, wherein the plurality of battery packs (131, 132, 133), the DC/DC converters (108a, 108b), and the two safety connectors (107a, 107b) comprising DC/DC protection fuses (109a, 109b) are configured such that the probability of failure of the low voltage system (105) with regards to the high voltage traction system (101) is below 10⁻¹⁵.

14. The system (101) of claim 13, wherein the probability of failure for the low voltage system (105) is determined with regards to ISO 26262.

15. A vehicle (1) comprising the high voltage traction system (101) of any of claims 1-14.
